# EUROPEAN PATENT APPLICATION

(11) **EP 1 626 333 A1**
(43) Date of publication of application: **15.02.2006**
(21) Application number: 04733436.2
(22) Date of filing: 17.05.2004
(51) Int. Cl.: G06F 3/12

(54) **PRINT RESULT DISPLAYING METHOD, LAYOUT EDITING METHOD, AND PRINT CONTROL DEVICE**

(30) Priority: 16.05.2003 JP 2003138787; 19.06.2003 JP 2003174778
(71) Applicant: SEIKO EPSON CORPORATION, Shinjuku-ku, Tokyo 163-0811 (JP)
(72) Inventor: MOMOSE, Hiroaki, c/o Seiko Epson Corporation, Suwa-shi, Nagano 3928502 (JP); KITAZAWA, Tatsuya, Epson Software Development Lab., Matsumoto-shi, Nagano 3998707 (JP)
(74) Representative: Sturt, Clifford Mark
(86) International application number: PCT/JP2004/006632
(87) International publication number: WO 2004/102373

(57) **Abstract**

A print-result display method comprising the step of displaying an image element laid out in a first area of a page to be printed on a print sheet and an image element laid out in a second area of a page not to be printed on the print sheet in different styles on a screen.

## Description

### TECHNICAL FIELD

The present invention relates to a print-result display method, a layout-editing device, and a print control device.

### BACKGROUND ART

There is known a system having a layout-editing function, such as an image editing device disclosed in patent document 1, which has a preview function to check the print results based on the print settings. A preview screen enables users to visually check the print result of a page with a layout edited by an application program on a print sheet according to a print setting of a printer driver, without actually printing the layout. Where an application program with a preview function is used, if users do not like the page layout displayed on the preview screen, users can re-edit the page layout displayed on the screen according to the print setting or change the print setting to another one, before actually printing it. In this respect, the application program with a preview function can reduce waste of time and print sheets compared to a case where the page layout is checked after actually printing it.

The conventional preview screen displays only an image in an area to be printed on a print sheet of the image elements to be printed. For example, in a preview screen of an application program that receives, on the screen, layout-editing operations of image elements, such as graphics, digital photographs and characters, the image elements that are allowed to be displayed on the preview screen are only those located inside a margin area. When printing is performed, it is difficult for users to quickly and distinguishablely recognize, on the conventional preview screen, which area of the image element to be printed is not to be printed.

The present invention has been made in the view of the above problems.It is an object of the invention to provide a print-result display method, a layout-editing method, and a print control device, each of which enables users to visually and distinguishably check, on the screen, the content of an area to be printed on a print sheet and the content of another area not to be printed on the print sheet of the image element to be printed.

### DISCLOSURE OF THE INVENTION

To achieve the above object, there is provided a print-result display method, comprising: displaying an image element laid out in a first area of a page to be printed on a print sheet and an image element laid out in a second area of the page not to be printed on the print sheet in different styles on a screen. By displaying an image element laid out in a first area of a page to be printed on a print sheet and an image element laid out in a second area of the page not to be printed on the print sheet are in different display styles on the screen,, users can confirm an area on the page to be printed on a print sheet and an area on the page not to be printed on the print sheet in a state that the content of the image element laid out in each area can be checked.

It is preferable that the second area is an area outwardly extending off the print sheet when the page is printed according to no margin setting. Generally, to print with no margin, printing is performed in the way that the image is formed in a wider range than an actual print sheet on a print sheet larger than the actual print sheet. When no margin is set, there exists an area printed outwardly extending off an actual print sheet. By setting the area outwardly extending off the print sheet when printed according to no margin setting to the second area, the content of the area outwardly extending off the print sheet of the image element laid out on the page can be confirmed on the screen.

When the setting of print sheet size of the page is changed, it is preferable to change a boundary between the first and second areas according to an aspect ratio of the print sheet size without substantially changing a size of an image element laid out on the page. For example, when the print sheet size is changed to a smaller one, if the image element on the screen is decreased in size according to the size change of the print sheet, it is sometimes hard to see the image element on the screen. Even when the setting of print sheet size of the page is changed, by changing a boundary between the areas to be printed and not to be printed on the print sheet according to the change of the print sheet size without substantially changing the size of the image element laid out on the page, it is possible to prevent the image element laid out on the page from being hard to see on the screen.

The print-result display method, which achieves the object, preferably comprises the steps of: displaying a rectangular area having an aspect ratio corresponding to the aspect ratio of the print sheet size; receiving, when the print condition is set to no margin, an scaling operation while maintaining a fixed aspect ratio of the rectangular area, through the screen displaying the first and the second areas in the rectangular area; and instructing, when the print condition is set to no margin, the printing of the image element inside the rectangular area with no margin. Therefore, when the print condition of no margin is set, users can set a part of the image element as the area to be printed, while checking the area to be printed on the print sheet and the area to be printed outwardly extending off the print sheet.

The print-result display method, which achieves the object, preferably comprises the steps of: displaying a rectangular area having an aspect ratio corresponding to the aspect ratio of the print sheet size; receiving, when the print condition is no margin, anscaling operation while maintaining the fixed aspect ratio of the rectangular area, through the screen where the rectangular area is displayed as the first area and an area around the rectangular area is displayed as the second area; and instructing, when the print condition is set to no margin, the printing of the image element laid out on the page in a third area as a merge of the first and second areas with no margin. Therefore, when the print condition of no margin is set, users can set a part of the image element as the area to be printed, while checking the area to be printed on the print sheet and the area to be printed outwardly extending off the print sheet.

The layout-editing method, which achieves the object, comprises the steps of: laying out an image element on a page;displaying the image element laid out in a second area of the page not to be printed on the print sheet in different display styles on a screen, storing a layout of said page. By displaying an image element laid out in a first area of a page to be printed on a print sheet and an image element laid out in a second area of the page not to be printed on the print sheet in different display styles on the screen, users can confirm an area on the page to be printed on a print sheet and an area on the page not to be printed on the print sheet in a state that the content of the image element laid out in each area can be checked.

It is desirable that the second area is an area outwardly extending off the print sheet when printing is performed according to no margin setting. By setting the area outwardly extending off the print sheet when it is printed according to no margin setting to the second area, the content of the area outwardly extending off the print sheet of the image element laid out on the page can be confirmed on the screen.

When the setting of the print sheet size is changed, it is desirable that a boundary between the first and second areas is changed according to an aspect ratio of the print sheet size without substantially changing a size of an image element laid out on the page. Even when the setting of print sheet size of the page is changed, by changing a boundary between the areas to be printed and not to be printed on the print sheet according to the change of the print sheet size without substantially changing the size of the image element laid out on the page, it is possible to prevent the image element laid out on the page from being hard to see on the screen.

It is desirable, in the image displaying step, to receive a layout changing operation of the layout of a decided image element through a screen displaying an area corresponding to an undecided image element the layout of which is determined in advance in the page together with the decided image element laid out in the page, and, in the layout step, to lay out the decided image element in the page according to the layout changing operation. By laying out a decided image element and an undecided image element on the page, a so-called template can be formed. By receiving operation of changing a layout of the decided image element through a screen displaying an area corresponding to the undecided image element together with the decided image element, users can form a template while checking the layout of the decided image element corresponding to the undecided image element.

A print control device, which achieves the above object, comprises: means for displaying an image element laid out in a first area of a page to be printed on a print sheet and an image element laid out in a second area of the page not to be printed on the print sheet are displayed in different styles on a screen; and means for outputting a print instruction of the page.

A print control device, which achieves the above object, comprises: means for displaying a rectangular area having an aspect ratio corresponding to the aspect ratio of the print sheet size; means for receiving, when the print condition is set to no margin, an scaling operation while maintaining the fixed aspect ratio of the rectangular area, through the screen displaying the first and the second areas in the rectangular area; and means for instructing, when the print condition is set to no margin, the printing of the image element inside the rectangular area with no margin.

A print control device, which achieves the above object, comprises: means for displaying a rectangular area having an aspect ratio corresponding to the aspect ratio of the print sheet size; means for receiving, when the print condition is set to no margin, an scaling operation while maintaining the fixed aspect ratio of the rectangular area, through the screen where the rectangular area is displayed as the first area and an area around the rectangular area is displayed as the second area; and means for instructing, when the print condition is set to no margin, the printing a third area as a merge of the first and second areas for the image element with no margin.

A print control program stored in a computer readable recording medium, which achieves the above object, causes a computer to function as: means for displaying an image element laid out in a first area of a page to be printed on a print sheet and an image element laid out in a second area of the page not to be printed on the print sheet are displayed in different styles on a screen; and means for outputting a print instruction of the page.

A print control program stored in a computer readable recording medium, which achieves the above object, causes a computer to function as: means for displaying a rectangular area having an aspect ratio corresponding to the aspect ratio of the print sheet size on the screen; means for receiving, when the print condition is set to no margin, an scaling operation while maintaining a fixed aspect ratio of the rectangular area through the screen where the rectangular area is displayed as the first area and an area around the rectangular area is displayed as the second area; and means for instructing, when the print condition is set to no margin, the printing of the image element inside a third area as a merge of the first and second areas with no margin.

A print-result display program, which achieves the object, causes a computer to function as: print-result display means for displaying a page on which an image element to be printed is laid out such that an area to be printed on a print sheet and another area not to be printed on the print sheet are distinguishably recognized, and that an image of an area not to be printed on the print sheet can be recognized.

It is preferable that the print-result display means recognizably displays an image in an area outwardly extending off the print sheet when the page on which the image element to be printed is laid out is printed according to the no margin setting.
When the setting of print sheet size of the page is changed, it is preferable that the print-result display means changes a boundary between the area to be printed and the area not to be printed according to an aspect ratio of the print sheet size without substantially changing a size of an image element laid out on the screen.

A layout-editing program, which achieves the object, causes a computer to function as: user interface means for receiving an instruction of editing a print layout of an image element through a screen for displaying a page on which animage element to be printed is laid out such that an area to be printed on a print sheet and another area not to be printed on the print sheet are distinguishably recognized, and that an image of an area not to be printed on the print sheet can be recognized; and layout editing means for editing a print layout of the image element according to the received instruction.

It is desirable that the user interface means recognizably displays an image in the area outwardly extending off a print sheet when the page on which an image element to be printed is laid out is printed according to the no margin setting.
When the setting of a print sheet size of the page is changed, the user interface means preferably changes a boundary between the areas to be printed and not to be printed on the print sheet according to a change of an aspect ratio of the print sheet size without substantially changing the size of the image element laid out on the screen.

It is desirable that the layout editing means edits a print layout of a page containing a decided image element and an undecided image element, and the user interface means receives an instruction to edit a print layout of the decided image element through a screen on which an area corresponding to the undecided image element contained in the page can visually be recognized.
The print-result display apparatus, which achieves the object, comprises print-result display means for displaying a page on which an image element to be printed is laid out such that an area to be printed on a print sheet and another area not to be printed on the print sheet are distinguishably recognized, and that an image of an area not to be printed on the print sheet can be recognized.

A layout-editing device, which achieves the object, comprises: user interface means for receiving an instruction of editing a print layout of an image element through a screen for displaying a page on which an image element to be printed is laid out such that an area to be printed on a print sheet and another area not to be printed on the print sheet are distinguishably recognized, and that an image of an area not to be printed on the print sheet can be recognized; and layout editing means for editing a print layout of the image element according to the received instruction.

A print control program, which achieves the object, causes a computer to function as: means for setting a rectangular area having an aspect ratio corresponding to that of a print sheet on an image element displayed on the screen, means for displaying the content inside the rectangular area such that an area to be printed on a print sheet and another area not to be printed on the print sheet are distinguishably recognized when printing is performed according to the no margin setting, and means for causing a printer to print the content of said rectangular area of an image element displayed on the screen, according to the no margin setting.

A print control program, which achieves the object, causes a computer to function as: means for setting a first rectangular area having an aspect ratio corresponding to that of a print sheet on an image element displayed on a screen; means for displaying, outside said rectangular area, a second area to be printed outwardly extending off a print sheet when printed according to the no margin setting, and means for causing a printer to print a third area as a merge of the first and second areas of the image element displayed on the screen according to the no margin setting.

A print control device, which achieves the object, comprises: means for setting a rectangular area having an aspect ratio corresponding to that of a print sheet on an image element displayed on the screen; means for displaying the content inside the rectangular area such that an area to be printed on a print sheet and another area to be printed outwardly extending off the print sheet are distinguishably recognized when printing is performed according to the no margin setting; and means for causing a printer to print the content of said rectangular area of an image element displayed on the screen, according to the no margin setting.

A print control device, which achieves the object, comprises: means for setting a first rectangular area having an aspect ratio corresponding to that of a print sheet on an image element displayed on the screen; means for displaying, outside said rectangular area, a second area to be printed outwardly extending off a print sheet when printed according to the no margin setting; and means for causing a printer to print a third area as a merge of the first and second areas of the image element displayed on the screen according to the no margin setting.
A plurality of means can each be realized by a hardware resource of which function is specified by its configuration per se, a hardware resource of which function is specified by a program, or a combination of those hardware functions. It is evident that the functions of the plurality of means are not limited to the functions realized by hardware resources physically independent from each other.

### BRIEF DESCRIPTION OF THE DRAWINGS

Fig. 1 is a model diagram showing a screen according to a first embodiment of the present invention.
Fig. 2 is a block diagram according to the first embodiment of the present invention.
Fig. 3 is a diagram showing a layout definition file according to the first embodiment of the present invention.
Fig. 4 is a model diagram showing a screen according to the first embodiment of the present invention.
Fig. 5 is a model diagram showing a print result according to the first embodiment of the present invention.
Fig. 6 is a model diagram showing the coordinates of an image projection area according to the first embodiment of the present invention.
Fig. 7 is a model diagram showing an image projection area and an editing area according to the first embodiment of the present invention.
Fig. 8 is a model diagram showing a screen according to the first embodiment of the present invention.
Fig. 9 is a model diagram showing a screen according to the first embodiment of the present invention.

### BEST MODE FOR CARRYING OUT THE INVENTION

An embodiment of the present invention will be described.

### (First Embodiment)

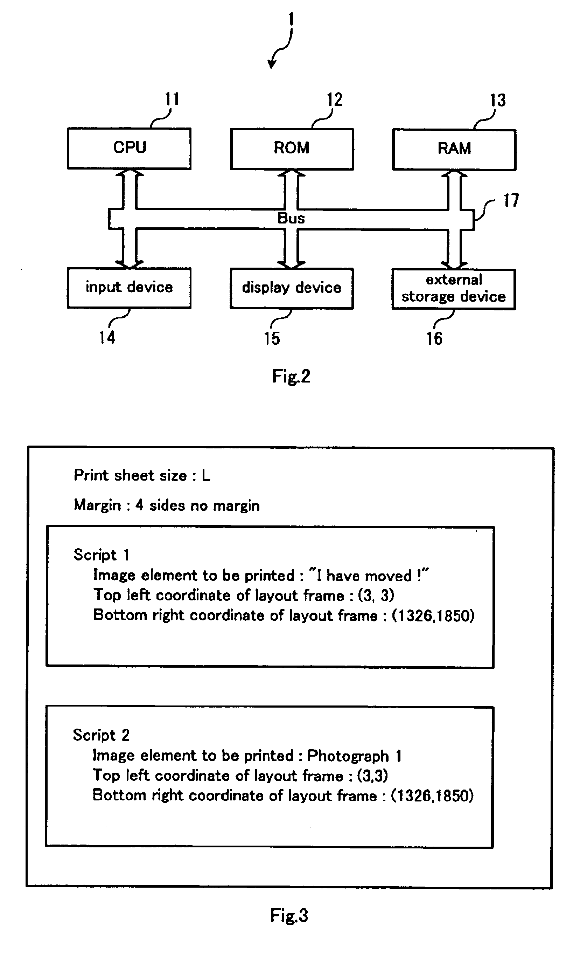

Fig. 2 is a block diagram showing a hardware configuration of a PC (personal computer) 1, which functions as a print control device of an embodiment of the invention. The PC 1 comprises a CPU 11, a ROM 12, a RAM 13, an input device 14, a display device 15, and an external storage device 16, which are interconnected by a bus 17. The CPU 11 controls the entire PC 1 by executing a program stored in the ROM 12 or the external storage device 16. The CPU 11 causes the PC 1 to serve as a layout-editing device by executing a layout-editing program that is stored in the external storage device 16. The layout-editing program of the embodiment of the present invention is a package application and contains a print-result display program of the embodiment of the invention. The ROM 12 is a memory storing various types of programs and data in advance. The RAM 13 is a memory for temporarily storing various types of programs and data. The input device 14 includes a computer mouse, a keyboard and others, and is used to enter instructions to edit a page layout. The display device 15 includes a CRT, an LCD (Liquid Crystal Display) and others. The external storage device 16 includes a hard disk and the like, and stores an operating system (OS), a layout-editing program, image files expressing image elements, an image projection area of the printer to be described later, and the like. Those programs and various data may be downloaded from a given server through a network, or read out of a computer-readable storage medium, such as a removable memory. The hardware configuration of the PC 1 is described above. A print-result display method, which is carried out by executing the layout-editing program, will now be described.

It is a common practice that image elements, such as a photographic image, an illustration image and characters, are composed to a photographic image taken by a digital still camera, and the resultant is printed. For example, a photographic image of a person is superimposed on an illustration image expressing a message of a birthday to print the composed image, and an illustration image of a decoration edge applied around a photographic image for its decoration is composed to the photographic image to print the composed one. The layout-editing program of the embodiment is a program composing an illustration image, for example, a decorative frame, to an upper layer of a photographic image recorded by a digital still camera, and generates a layout definition file to print the composed image. The layout definition file corresponds to data expressing a so-called template.

The layout definition file is edited for each sheet size and each margin, and as shown in Fig. 3, a script that defines a layout frame for each image element is described in the layout definition file. The layout frame is a frame defining a position and a size of an image element on a page to which the sheet size and the margin are set. With regard to the upper-and-lower-relationship between the layers of the image elements layout frames of which are defined by the scripts, it is interpreted that a layer of the script precedingly described is upper than a layer of the subsequently described script. In the description to be given, an image element data of which expressing an image is not yet determined though the layout definition file has been completed will be referred to as an "undecided image element". An image element data of which expressing an image has been determined by the completion of the layout definition file will be referred to as a "decided image element". The data expressing the undecided image element is, for example, an image file which is not determined till a stage where an instruction to print is given to the printer by using the layout definition file. In a layout-editing program, a layout of the undecided image element is defined by describing the script using an identifier (corresponding to "Photograph 1" in the example of Fig. 3) for setting an undecided image element as an image element to be laid out by a specific script (corresponding to "Script 2" in the example Fig. 3). In the stage where a print instruction is given by using a layout definition file, its identifier can be associated with an image file expressing a photographic image generated by, for example, a digital camera. When an image element to be printed is composed according to the layout definition file, an image of the image file associated with the identifier is processed as the image element to be printed.

In the layout-editing program in the embodiment, a layout frame (corresponding to a layout frame of "Script 2" in the example of Fig. 3) of the undecided image element is uniformly set so that a photographic image recorded by a digital camera is always laid out, at the lowest layer, over a full printable area defined by its outer edge. The layout-editing program of the embodiment receives an operation of editing a layout of a decided image element through the screen, and sets a layout frame of the decided image element according to the editing operation.

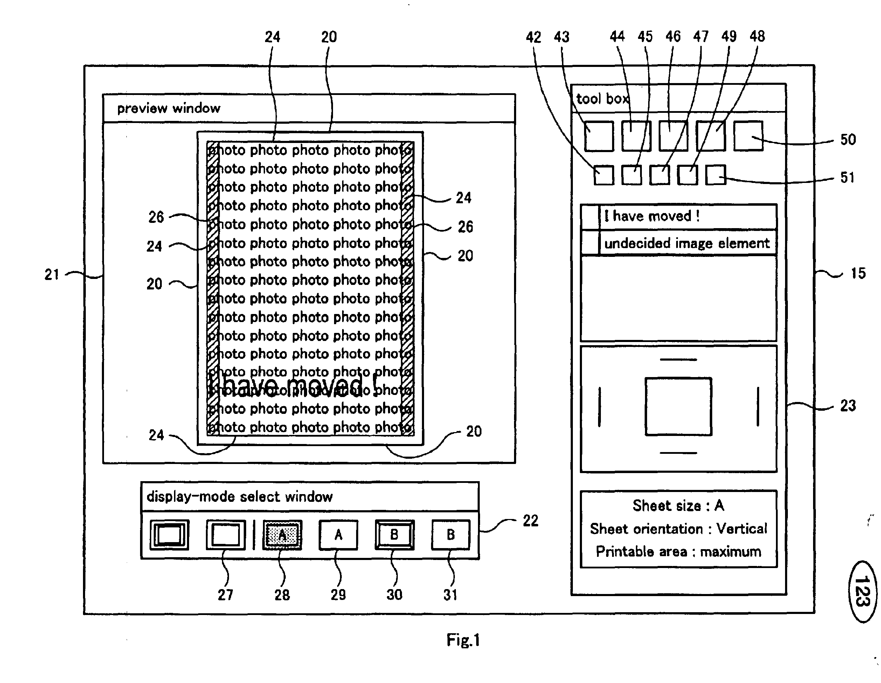

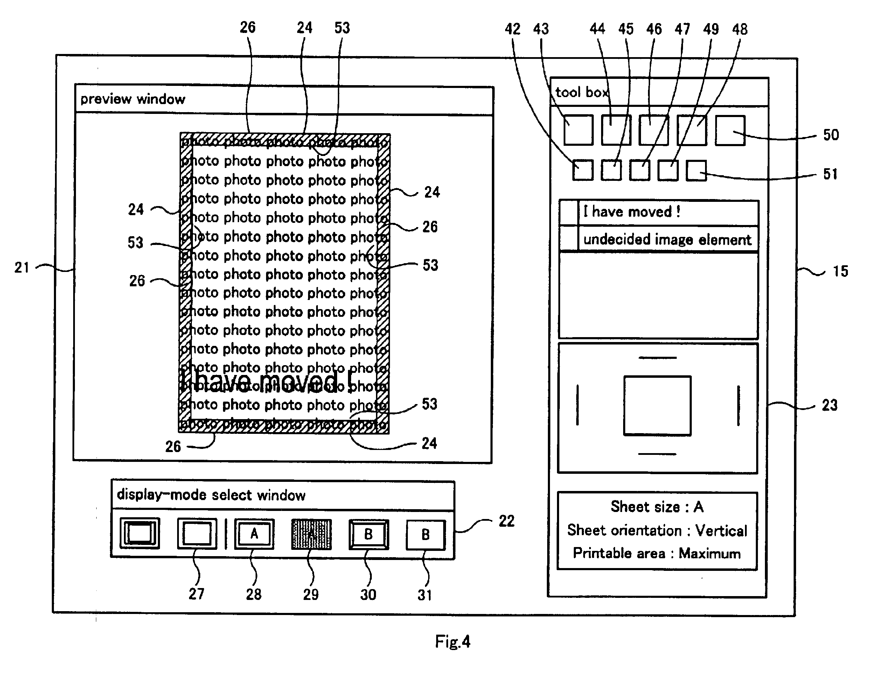

Figs. 1 and 4 is a model diagram showing a screen displayed under control of the layout-editing program. The layout-editing program, for example, displays three windows, a preview window 21, a display-mode select window 22 and a tool box 23 as illustrated. The display-mode select window 22 is a window for displaying buttons for selecting display modes. When one of buttons 28, 29, 30 and 31 is selected, the computer displays a page for previewing purposes in the preview window 21 in a state that a print sheet size and margins of the page are already set, and the computer shifts its mode to a mode in which it receives an instruction to lay out an image element. When a button 27 is selected for its activation, the computer displays a screen containing a common area which is printable when L-size with margins, L-size with no margin, postcard-size with margins, and postcard-size with no margin are all set for printing. Then, the computer shifts its mode to a mode where it receives an instruction to lay out the image element.

The preview window 21 is a window for a user to lay out an image element. The user lays out a decided image element in the preview window 21 to edit a page layout. More specifically, when a decided image element is laid out in the preview window 21, the PC 1 receives an instruction to layout the decided image element on the page. A preview of the print result based on a display mode is displayed in the preview window 21. An outer edge 24 of an area corresponding to an undecided image element is displayed in the preview window 21. In the present embodiment, a large number of character strings "photo" are regularly arrayed in areas corresponding to undecided image elements for easy viewing of those areas.

An image expressed by an image file formed in advance, character strings of a text input by a keyboard, graphics depicted on the screen, and others can be laid out as decided image elements in the area corresponding to the undecided image elements in the preview window 21.
The tool box 23 visually presents buttons for calling functions to select or edit image elements to be laid out by the user. In operation, a user clicks a button 44 and designates a rectangular area corresponding to an undecided image element by a pointer of a computer mouse. In turn, the computer displays a screen on which the user can select a list of undecided image elements that is pre-stored in the external storage device 16. The user views the list and selects an undecided image element displayed. Upon the selection, the computer lays the selected undecided image element in the designated rectangular area. When the user clicks a button 46 and designates a rectangular area corresponding to an undecided image element by the pointer of the computer mouse, the computer allows the user to input a text to the designated rectangular area, and a text input is laid in the designated rectangular area. In Figs. 1 and 4, there is shown a screen containing a layout of the text of a message "I have moved!" When the user clicks a button 48 and drags the pointer within an area corresponding to an undecided image element, a straight line is laid out along a locus of the pointer dragged. When a button 50 is clicked, a decided image element displayed in the preview window 21 can be selected. Buttons 42, 45, 47, 49 and 51 are used for relatively increasing or decreasing a layer order of the decided image element being selected.

The decided image element laid out on the preview window 21 is displayed in an area where the entire area including an area not to be printed on a print sheet corresponds to the undecided image element. When an image element is laid out in a margin area along the peripheral edge of the print sheet, and when an image element is laid out in an area where printing is carried out outwardly extending off the print sheet when the print setting is set to no margin, an area not to be printed on the print sheet occurs in the image element.

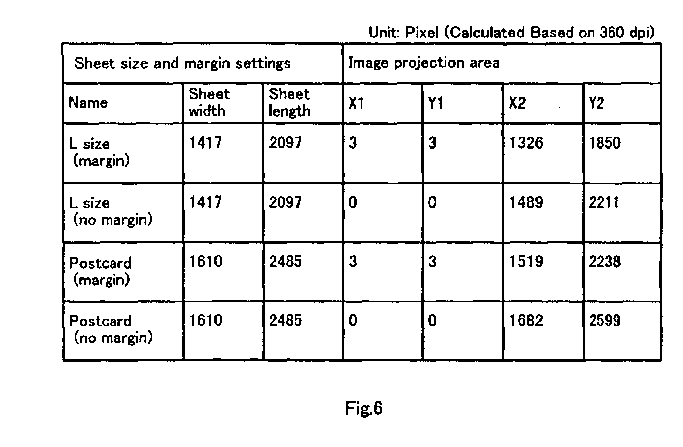

An area of the image element located outside an area corresponding to an image projection area on the screen is displayed as an area 26 not to be printed on a print sheet. In the present specification, the term "image projection area" means the largest area of an image that can be output by the printer when specific sheet size and margin are set. Specifically, when the image is printed on a print sheet of unlimited size in a state that the specific sheet size and margin are set, the largest area within which the image can be formed is the image projection area. As shown in Fig. 6, image projection areas are pre-stored for each sheet size and margin in the external storage device 16. When a sheet size and a margin are set, the image projection area is uniquely determined on a page coordinate system. Specifically, for example, the image projection area is an area obtained by subtracting the absolute values of four side margins from an area corresponding to a sheet size where the print setting is 4-side margin. For example, when the print setting is no four-side margin, the image projection area is the sum of the absolute values of the widthwise areas being outwardly extended off the four sides of the sheet (negative margin) to an area corresponding to a sheet size. In a specific example where the L-size with margins is set for the sheet size and the margin, the image projection area is a rectangular area defined by a top left (3, 3) and a bottom right (1326, 1850). In a page coordinate system employed in the embodiment, a distance corresponding to one pixel that is printed at 360 DPI (dot per inch), is set at "1".

An area on the screen not to be printed on a print sheet is visually presented so as to distinguish it from an area on the screen to be printed, and to recognize the content of an image element in the area. In a specific example, a boarder line is displayed along a boundary between the area to be printed on the print sheet and the area not to be printed on the print sheet. The boundary between the area to be printed on the print sheet and the area not to be printed on the print sheet can be specified on the basis of the image projection area. With regard to the image element of those image elements that is in the area not to be printed on the print sheet, there is no need of displaying such an image element in such a level as to exactly recognize its content. Such a level that the user can roughly recognize it suffices for the display requirement. In a specific example, in the area not to be printed on the print sheet, a brightness level of the decided image element may be lowered or regularly arrayed black dots or hatching is formed on the uppermost layer. In Figs. 1 and 4, the uppermost layer of the area 26 not to be printed on the print sheet is hatched. Where the image element to be printed is displayed so as to discriminate the area not to be printed on the print sheet from the area to be printed on the print sheet, and to recognize an image in the area not to be printed on the print sheet, it is easy to lay out the image elements on the screen.

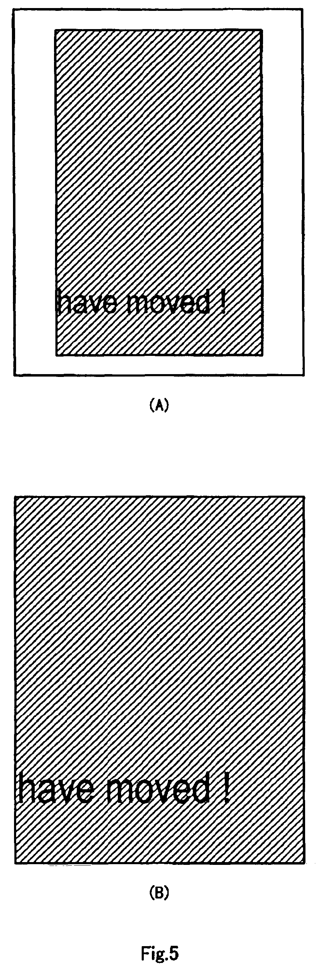

When a button 28 is clicked, the computer shifts its mode to a mode where a decided image element can be laid out in the preview window 21 displaying a preview of a page of which the sheet size is set at L-size and the margin is set at frameless. In this mode, as shown in Fig. 1, an outer edge 20 of a print sheet of L size and an outer edge 24 of an area for the undecided image element are displayed. Fig. 5(A) shows a print sheet of L size on which the layout on the screen of Fig. 1 is actually printed. In Fig. 5, a hatched area is an area on which a photographic image is printed as the undecided image element.

When a button 29 is clicked, as shown in Fig. 4, the computer shifts its mode to a mode where a decided image element can be laid out in the preview window 21 which is displaying a preview of a page of which the sheet size is set at L-size and the margin is set at frameless. In this mode, the outer edge 24 of an area corresponding to the undecided image element is displayed, but the outer edge of a print sheet of L size is not displayed. An inner edge 53 of the area 26 not to be printed on the print sheet within the area corresponding to the undecided image element corresponds to an outer edge of the print sheet of L size. Fig. 5(B) shows a print sheet of L size on which the layout on the screen shown in Fig. 4 is actually printed.

When a button 30 is clicked, the computer shifts its mode to a mode where a decided image element can be laid out in the preview window 21 displaying a preview of a page of which the sheet size is set at postcard-size and the margin is set at frameless.
When a button 31 is clicked, the computer shifts its mode to a mode where a decided image element can be laid out in the preview window 21 displaying a preview of which the sheet size is set at postcard-size and the margin is set at frameless.

When the buttons 28, 29, 30, 31 or 27 is clicked and mode switching is performed among those four modes, a boundary between the area to be printed and the area not be printed is changed when the setting of the sheet size or the margin is changed to another setting, and hence an aspect ratio of the image projection area is changed. When the mode is switched among the four modes, the area corresponding to the undecided image element and the decided image element remain unchanged in size on the screen. This fact prevents that as the result of the mode switching, the image element becomes hard to see.

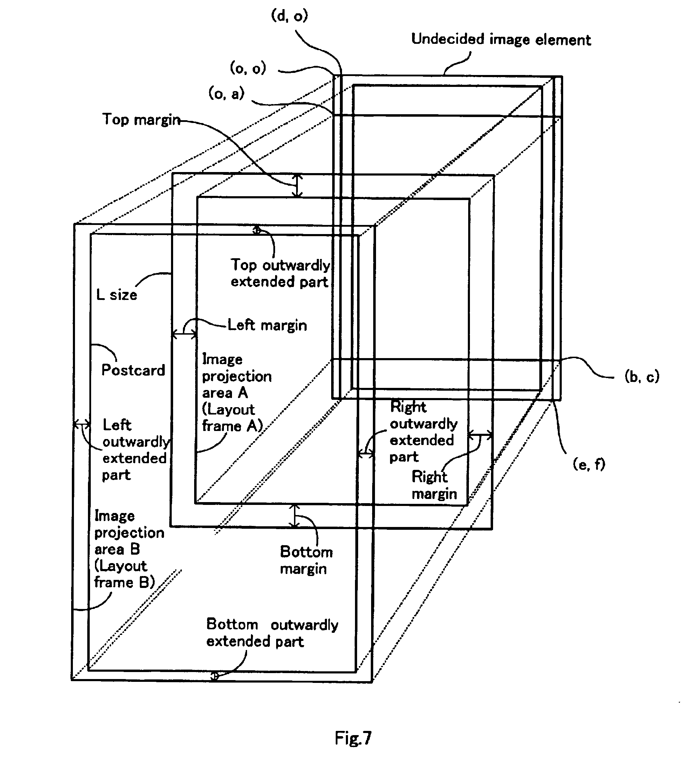

Fig. 7 is a model diagram illustrating positional relationships between the undecided image element and the image projection areas, the layouts of which on the page are predetermined. As described above, the image projection area is uniquely specified when the sheet size and the margin are set. In the example shown in Fig. 7, when the L size with margins is specified, an image projection area A is specified, and when the postcard size with no margin is specified, an image projection area B is specified. When the image projection area is specified, a positional relationship between the image projection area and the undecided image element is uniquely determined. Specifically, for example, the image projection area is uniquely positioned to the undecided image element so that the center of the image projection area is coincident with that of the undecided image element and located in an area corresponding to the undecided image element, and the opposed sides of the image projection area overlap with the opposed sides of the undecided image element, respectively. For example, when the L size with the margin is set, the image projection area A is horizontally long with respect to the undecided image element. The undecided image element is positioned to the image projection area so that the right and left sides of the image projection area A overlap with the right and left sides of the undecided image element, respectively. For example, when the postcard size with no margin is set, the image projection area B is vertically long with respect to the undecided image element. Therefore, the undecided image element is positioned to the image projection area so that the top and bottom sides of the image projection area B overlap with the top and bottom sides of the undecided image element, respectively. In the embodiment, a layout frame of the undecided image element is uniformly determined so as to be coincident with the image projection area.

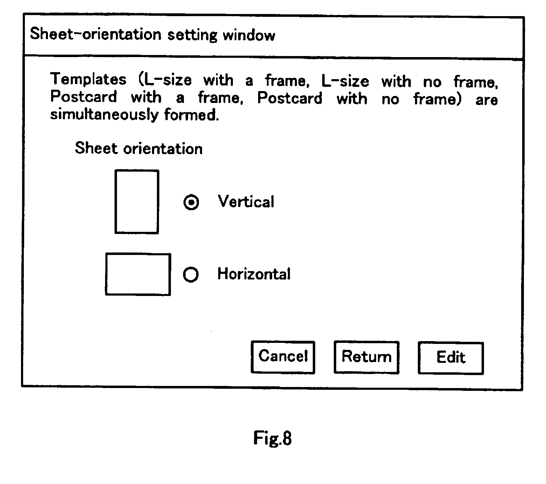

Operation of the PC 1 will be described.
Upon receipt of a program execution instruction through an OS from a user, the PC 1 starts to execute a layout-editing program. In turn, the PC 1 displays a sheet-orientation setting window 41 for selecting an orientation (horizontal or vertical orientation) of the undecided image element shown in Fig. 8. When the user selects an orientation of the undecided image element on the sheet-orientation setting window 41, a screen presented upon clicking of the button 27 is displayed on the screen of the display device 15. In the example shown in Figs. 1 and 4, the screen presented when the user selects the vertical orientation is shown.

Upon completion of the operation of laying out image elements on the screen shown in Fig. 1 or 4, a layout definition file in which a script that defines a layout frame for each image element is described is formed on a page the print conditions of which have been set as L-size with margins, L-size with no margin, postcard-size with margins, and postcard-size with no margin.
A layout frame of an image element on the page coordinate system can be defined by converting a coordinate defining a position of the image element on the screen into a printer coordinate according to the settings of sheet size, margin, and screen resolution. If positions of an image element laid out on the screen is expressed on a screen coordinate system of the display device 15 in which the coordinate of the top left corner of the undecided image element is set at the origin (0, 0), the area of the undecided image element that is based on the print settings of the L-size with the margins is coincident with the image projection area A at (0, a) (top left corner) and (b, c) (bottom right corner), as shown in Fig. 7. "a", "b" and "c" are the coordinates that are uniquely specified according to the print settings of the sheet size, the margin, and the resolution of the screen. In the page coordinate system, the image projection area A is defined by the coordinates (3, 3), (1326, 1850), as shown in Fig. 6. Therefore, the coordinate (0, a) in the screen coordinate system is converted into the coordinate (3, 3) in the page coordinate system, and the coordinate (b, c) in the screen coordinate system is converted into the coordinate (1326, 1850) in the page coordinate system. More specifically, to lay out the undecided image element over the entire image projection area A according to the print setting of L-size with margins, a script 2 shown in Fig. 3 is defined. When the layout frame and the image element are not coincident with the aspect ratio, the image element can be laid out in the full area of the layout frame, for example, in the following manner. The image element is laid out such that the layout frame is inscribed in the outer edge of the image element, and the area of the image element within the layout frame is clipped and displayed. The same thing is applied to a case where the print setting is postcard-size with no margin, and an undecided image element is laid out over the entire area of the image projection area B. The area (d, 0), (e, f) which is the undecided image element corresponding to the image projection area B is converted into (0, 0), (1682, 2599) in the page coordinate system. "d", "e" and "f" are the coordinates that are uniquely determined according to the settings of the sheet size, the margin and the screen resolution.

In the first embodiment, a description is made about the layout-editing device for forming a so-called template by editing the layout of the page on which the decided image element and the undecided image element are laid out. It is evident that the present invention may be applied to a layout-editing device for editing a layout of a page on which only the decided image element is laid out.

### (Second Embodiment)

A print control program of a second embodiment of the present invention causes an electronic device, such as the PC 1, a standalone printer, a digital camera, PDA (personal digital assistants), a digital television receiver and a cellular phone, to function as a print control device for causing a printer to print in a rectangular area that is set as an area to be printed by a user. Each of those electronic devices executes the print control program, so that a print-result display method of the invention is executed. Each electronic device executing the print-result display method comprises a processor for executing the print control program, a memory to which the print control program is loaded, a nonvolatile storing medium for storing the print control program, a display device of the dot matrix type, such as an LCD, and an input device including cursor keys, push-button switches and the like. The second embodiment will be described using the PC 1 shown in Fig. 2 as an example.

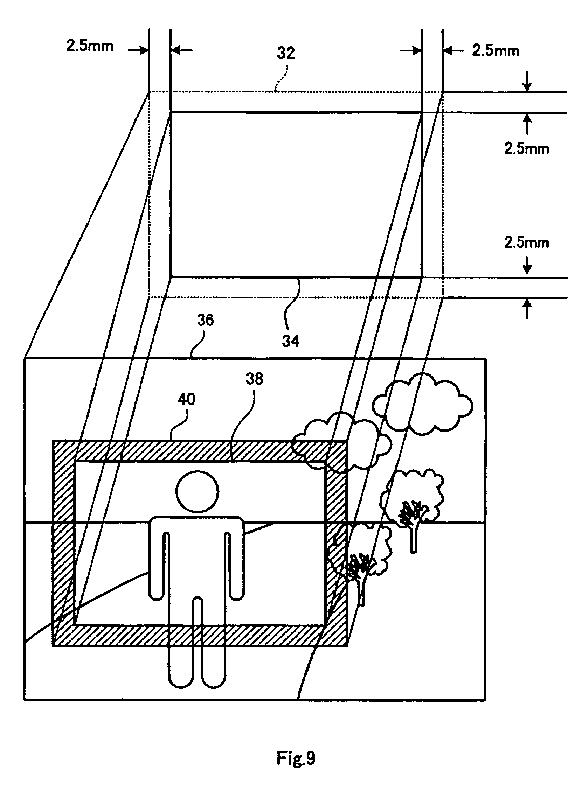

Fig. 9 is a model diagram showing a screen displayed under control of the print control program according to the second embodiment of the invention. An image element 36 is displayed in a predetermined area (the entire screen, window, etc.) on the screen of the display device 15 shown in Fig. 2 where the print control program is executed by the CPU 11. The print control program is started upon selection of a print menu on a page on which the image element 36 is to be laid out. The image element 36 is displayed on the screen of the display device 15 on the basis of photographic image data recorded by a digital camera, for example, graphic data prepared by a graphic application, and the like.

When a given event, such as clicking to a given icon, not shown, (for example, a "cutting" button) happens, an outer frame 40 or an inner frame 38, which defines a rectangular area to be printed, is laid out at a predetermined location on the image element 36 at a predetermined aspect ratio. When the four-side margin is set for the print condition, the outer frame 40 or the inner frame 38 is displayed.

When no four-side margin is set for the print condition, the inner frame 38 is displayed while being located inside the outer frame 40. The area inside the inner frame 38 is an area to be printed on the print sheet. An area between the inner frame 38 and the outer frame 40 is an area not to be printed on the print sheet. An aspect ratio of the inner frame 38 is equal to that of a print sheet size 34. An aspect ratio of the outer frame 40 is equal to that of an outer edge 32 of an area to be printed in a state that it is outwardly extended off the areas of the print sheet 34 when printing is performed according to the print setting of no 4-side margin. In other words, an aspect ratio of the outer frame 40 is equal to that of the image projection area corresponding to the print setting of no four-side margin. To print on the print sheet size 34 with no margin, an image is printed in a state that it outwardly extends off the print sheet size 34 by 2.5mm at each of four sides, right and left, and top and bottom sides. In this case, the image projection area is the merged one of an area corresponding to the print sheet size 34 and the area of 2.5mm wide surrounding the area.

The print control program presents display styles inside and outside the inner frame 38, which are different from each other, thereby causing the user to distinguishably recognize the areas outwardly extended off the print sheet. In a specific example, an area between the outer frame 40 and the inner frame 38 is hatched. In another example, a great number of dots regularly arrayed are displayed above the image element 36. In a further example, a filtering process to change brightness and color tone of the image element 36 is applied to the outside of the inner frame 38. By displaying the image element 36 between the outer frame 40 and the inner frame 38, the area to be printed can be set on the screen in a state that the content of the image within the area not to be printed on the print sheet can be checked.

The print control program may make the display styles inside and outside the inner frame 38 the same, or may put the image element 36 in a non-display state between the inner frame 38 and the outer frame 40. Even when the display styles inside and outside the inner frame 38 are the same, the user can recognize a part of the area inside the inner frame 38 to be printed on the print sheet, and the user can set the area to be printed on the screen in a state that the content of the image in the area not to be printed on the print sheet can be checked. When the image element 36 between the inner frame 38 and the outer frame 40 is put in non-display state, the user cannot check the content of the image on the area not to be printed on the print sheet, but the user can set the area to be printed on the screen in a state that the user can recognize a part of the area inside the outer frame 40 to be printed on the print sheet,

The print control program receives operations that are performed by the user to move and scale the outer frame 40 or the inner frame 38. It is noted that the print control program dose not receive the scaling operation which inevitably needs a change of the aspect ratio of the outer frame 40 or the inner frame 38. The reason for this is that the aspect ratios of the outer frame 40 and the inner frame 38 are determined by the print sheet size 34 and the margin setting. The operation for moving the area to be printed is received by the drugging of a linear part of the outer frame 40 or the inner frame 38. The operation for scaling the area to be printed is received by the drugging of a corner of the outer frame 40 or the inner frame 38.

When a given event, such as clicking to a given icon (for example, a "print" button) on the screen, the print control program forms print data corresponding to the area inside the outer frame 40 on the basis of the print condition already set, outputs print data to the printer, and causes the printer to print the area inside the outer frame 40 of the image element according to the print data. If necessary, the print control program may take the following process: it outputs the image data corresponding to the area inside the outer frame 40, and the print conditions, such as print sheet size setting and margin setting, to the printer, and causes the printer to convert the image data into print data according to the print conditions. When the print condition is set to no four-side margin, the printing result by the printer is that the area inside the inner frame 38 of the image element 36 is printed over the entire area of the print sheet size 34 with no margins.

In the second embodiment, the area to be printed is set on the page formed by one image element 36, the area to be printed may be set on a part of the page containing a plurality of image elements.
In the second embodiment, the PC 1 issues a print instruction to the printer. In a standalone type printer which is operable independently of the PC 1, the control unit issues a print instruction, and a printer engine performs printing. By executing the control program in an electronic device directly connected to the printer, which can control the printer, such as the digital camera, cellular phone, PDA, digital television receiver, and cellular phone, a print instruction may be issued to the printer by the electronic device.

## Claims

1. A print-result display method, comprising:
displaying an image element laid out in a first area of a page to be printed on a print sheet and an image element laid out in a second area of the page not to be printed on the print sheet in different styles on a screen.

2. A print-result display method according to claim 1,
wherein said second area outwardly extending off said print sheet when said page is printed according to a no margin setting.

3. A print-result display method according to claim 1, further comprising:
changing a boundary between said first and second areas according to an aspect ratio of said print sheet size without substantially changing a size of an image element laid out on said page when a setting of print sheet size of said page is changed.

4. A print-result display method according to claim 1, further comprising the steps of:
displaying a rectangular area having an aspect ratio corresponding to the aspect ratio of said print sheet size;
receiving, when the print condition is set to no margin, an scaling operation while maintaining a fixed aspect ratio of said rectangular area, through said screen displaying said first area and said second area in said rectangular area; and
instructing, when the print condition is no margin, the printing of said image element inside said rectangular area with no margin.

5. A print-result display method according to claim 1, further comprising the steps of:
displaying a rectangular area having an aspect ratio corresponding to the aspect ratio of said print sheet size;
receiving, when the print condition is set to no margin, an scaling operation while maintaining a fixed aspect ratio of said rectangular area, through said screen where said rectangular area is displayed as said first area and an area around said rectangular area is displayed as said second area; and
instructing, when the print condition is set to no margin, the printing of said image element inside a third area as a merge of said first and second areas with no margin.

6. A layout-editing method, comprising the steps of:
laying out an image element on a page,
displaying said image element laid out in a first area of said page to be printed on a print sheet and said image element laid out in a second area of said page not to be printed on the print sheet in different styles on a screen; and
storing a layout of said page.

7. A layout-editing method according to claim 6,
wherein said second area is an area outwardly extending off said print sheet when printing is performed according to a no margin setting.

8. A layout-editing method according to claim 6, further comprising the step of:
changing a boundary between said first and second areas according to an aspect ratio of said print sheet size without substantially changing a size of an image element laid out on said page when the setting of the print sheet size is changed.

9. A layout-editing device according to claim 6, further comprising the steps of:
receiving a layout changing operation of the layout of a decided image element through a screen for displaying an area corresponding to an undecided image element of which the layout is determined in advance in said page together with said decided image element laid out in said page in said image displaying step; and
laying out said decided image element in said page according to said layout changing operation in said layout step.

10. A print control device, comprising:
means for displaying an image element laid out in a first area of a page to be printed on a print sheet and an image element laid out in a second area of the page not to be printed on the print sheet in different styles on a screen; and
means for outputting a print instruction of said page.

11. A print control device comprising:
means for displaying a rectangular area having an aspect ratio corresponding to the aspect ratio of said print sheet size;
means for receiving, when the print condition is no margin, an scaling operation while maintaining a fixed aspect ratio of said rectangular area, through said screen displaying said first area and said second area in said rectangular area; and
means for instructing, when the print condition is set to no margin, the printing of said image element inside said rectangular area with no margin.

12. A print control device comprising:
means for displaying a rectangular area having an aspect ratio corresponding to the aspect ratio of said print sheet size;
means for receiving, when the print condition is set to no margin, an scaling operation while maintaining a fixed aspect ratio of said rectangular area, through said screen where said rectangular area is displayed as said first area and an area around said rectangular area is displayed as said second area; and
means for instructing, when the print condition is set to no margin, the printing of said image element inside a third area as a merge of said first and second areas with no margin.

13. A computer readable recording medium for recording a print control program for causing a computer to function as:
means for displaying an image element laid out in a first area of a page to be printed on a print sheet and an image element laid out in a second area of the page not to be printed on the print sheet are displayed in different styles on a screen; and
means for outputting a print instruction of said page.

14. A computer readable recording medium for recording a print control program for causing a computer to function as:
means for displaying a rectangular area having an aspect ratio corresponding to the aspect ratio of said print sheet size;
means for receiving, when the print condition is set to no margin, an scaling operation while maintaining a fixed aspect ratio of said rectangular area, through said screen where said rectangular area is displayed as said first area and an area around said rectangular area is displayed as said second area; and
means for instructing, when the print condition is set to no margin, the printing of said image element inside a third area as a merge of said first and second areas with no margin.

15. A computer readable recording medium for recording a print control program for causing a computer to function as:
means for displaying a rectangular area having an aspect ratio corresponding to the aspect ratio of said print sheet size;
means for receiving, when the print condition is set to no margin, an scaling operation while maintaining a fixed aspect ratio of said rectangular area, through said screen where said rectangular area is displayed as said first area and an area around said rectangular area is displayed as said second area; and
means for instructing, when the print condition is set to no margin, the printing of said image element inside a third area as a merge of said first and second areas with no margin.
